(19) Europäisches Patentamt
European Patent Office
Office européen des brevets

(11) Veröffentlichungsnummer: **0 112 797 A1**

# (12) EUROPÄISCHE PATENTANMELDUNG

(21) Anmeldenummer: **83810538.5**

(22) Anmeldetag: **21.11.83**

(51) Int. Cl.³: **D 06 P 3/66,** C 09 B 62/465

(30) Priorität: **26.11.82 CH 6892/82**

(43) Veröffentlichungstag der Anmeldung: **04.07.84 Patentblatt 84/27**

(84) Benannte Vertragsstaaten: **CH DE FR GB IT LI**

(71) Anmelder: **CIBA-GEIGY AG, Postfach, CH-4002 Basel (CH)**

(72) Erfinder: **Scheibli, Peter, Dr., Nussbaumweg 3, CH-4103 Bottmingen (CH)**

## (54) Verfahren zum Färben oder Bedrucken von cellulosehaltigem Fasermaterial mit Reaktivfarbstoffen.

(57) Ein Verfahren zum Färben oder Bedrucken von cellulosehaltigem Fasermaterial mit Reaktivfarbstoffen, welches dadurch gekennzeichnet ist, dass man Reaktivfarbstoffe der Formel

$$D - \left[ \begin{array}{l} N - CO - Y \\ | \\ R \end{array} \right]_{1-2} \quad (1),$$

worin D der Rest eines sulfogruppenhaltigen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder der Rest eines gegebenenfalls substituierten Kohlenwasserstoffs, Y ein Rest

$$-\underset{\displaystyle X}{\underset{|}{CH}} - CH_2 - X$$

oder

$$-\underset{\displaystyle X}{\underset{|}{C}} = CH_2$$

und X Chlor oder Brom ist, in wässrigem Medium mit einem pH>7 einsetzt, gibt Färbungen oder Drucke mit guten Echtheitseigenschaften.

EP 0 112 797 A1

CIBA-GEIGY AG
4002 Basel



1-14204/=

# Verfahren zum Färben oder Bedrucken von cellulosehaltigem Fasermaterial mit Reaktivfarbstoffen

Die vorliegende Erfindung liegt auf dem technischen Gebiet der Anwendung von Reaktivfarbstoffen zum Färben oder Bedrucken von cellulosehaltigem Fasermaterial.

Reaktivfarbstoffe werden seit langem in grossem Umfang für das Färben und Bedrucken von Textilien aus Fasermaterialien eingesetzt. Angesichts der steigenden Anforderungen an Reaktivfärbungen in bezug auf Wirtschaftlichkeit, Applikationstechnik und Echtheitsniveau ist der erreichte technische Stand aber vielfach nicht voll befriedigend.

Der vorliegenden Erfindung lag die Aufgabe zugrunde, ein neues, verbessertes Verfahren zum Färben oder Bedrucken von cellulosehaltigem Fasermaterial mit Reaktivfarbstoffen zu finden, das zu echten Färbungen und Drucken führt.

Mit der vorliegenden Erfindung wird ein neues Verfahren vorgestellt, das die gestellten Anforderungen erfüllt.

Das Verfahren ist dadurch gekennzeichnet, dass man Reaktivfarbstoffe der Formel

$$D\left[\begin{array}{l} N - CO - Y \\ | \\ R \end{array}\right]_{1-2} \qquad (1) \quad ,$$

worin D der Rest eines sulfogruppenhaltigen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder der Rest eines gegebenenfalls substituierten Kohlenwasserstoffs, Y ein Rest

$-CH-CH_2-X$
 |
 X

oder

$-C = CH_2$
 |
 X

und X Chlor oder Brom ist, in wässrigem Medium mit einem pH>7 einsetzt.

In dem erfindungsgemässen Verfahren werden bevorzugt verwendet:

a) Reaktivfarbstoffe der Formel (1), worin D der Rest eines Mono- oder Disazofarbstoffes ist;

b) Reaktivfarbstoffe der Formel (1), worin D der Rest eines Kupfer-Azofarbstoff-Komplexes ist;

c) Reaktivfarbstoffe der Formel (1), worin D der Rest eines Kupfer- oder Nickelphthalocyanins, Kupfer-Formazan-Komplexes oder Triphendioxazins ist;

d) Reaktivfarbstoffe gemäss b), worin D der Rest eines 1:1-Kupfer-Azofarbstoff-Komplexes der Benzol- oder Naphthalinreihe ist, und das Kupferatom an jeweils eine metallisierbare Gruppe in ortho-Position zur Azobindung gebunden ist;

e) Reaktivfarbstoffe der Formel (1) oder gemäss a) bis d), worin R Wasserstoff oder gegebenenfalls substituiertes $C_{1-4}$-Alkyl ist;

f) Reaktivfarbstoffe der Formel

$$[D_1 - N = N - K \Big]\!\!-\!\!\left[\begin{array}{l} N - CO - Y \\ | \\ R \end{array}\right]_{1-2} \qquad (2) \quad ,$$

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, Y die unter Formel (1) angegebene Bedeutung hat, und der Reaktivrest an die Diazokomponente oder an die Kupplungskomponente gebunden ist, oder je ein Reaktivrest sowohl an die Diazokomponente als auch an die Kupplungskomponente gebunden ist, oder zwei Reaktivreste an die Kupplungskomponente oder an die Diazokomponente gebunden sind;

g) Reaktivfarbstoffe gemäss f), worin R Wasserstoff oder Methyl ist;

h) Reaktivfarbstoffe der Formel (1) oder gemäss a) bis g), welche 2 Reste der Formel

$$\begin{array}{l} - N - CO - Y \\ \;\;\, | \\ \;\;\, R \end{array} \qquad (3)$$

enthalten;

i) Reaktivfarbstoffe der Formel (1) oder gemäss a) bis h), worin Y ein $\alpha,\beta$-Dibromäthyl- oder $\alpha$-Bromvinylrest ist.

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Aethyl, Methoxy, Benzoylamino, Amino, Acetylamino, Ureido, Sulfomethyl, Hydroxy, Carboxy, Halogen oder Sulfo.

Der Rest eines gegebenenfalls substituierten Kohlenwasserstoffs R ist z.B. ein Alkylrest, der geradkettig oder verzweigt ist, der vorzugsweise 1 bis 7 Kohlenstoffatome aufweist, und der weitersubstituiert sein kann, z.B. durch Halogen, Hydroxy, Cyan, Alkoxy, Carboxy oder Sulfo, oder ein unsubstituierter Alkylrest mit 7 bis 20 Kohlenstoffatomen, ein Cyclohexylrest, oder ein Phenylrest, der z.B. durch Methyl, Aethyl, Methoxy, Aethoxy, Chlor, Brom, Carboxy, Sulfo oder Sulfomethyl substituiert sein kann.

Als Beispiele für R seien die folgenden Substituenten genannt: Methyl, Aethyl, Propyl, Isopropyl, Butyl, Isobutyl, sek.-Butyl, tert.-Butyl, Pentyl,Hexyl, Nonyl, Dodecyl, Hexadecyl, Pentadecyl, Carboxymethyl, β-Carboxyäthyl, β-Carboxypropyl, Methoxycarbonylmethyl, Aethoxycarbonylmethyl, β-Methoxyäthyl, β-Aethoxyäthyl,

β-Methoxypropyl, β-Chloräthyl, γ-Chlorpropyl, γ-Brompropyl, β-Hydroxyäthyl, β-Hydroxybutyl, β-Cyanäthyl, Sulfomethyl, β-Sulfoäthyl, Aminosulfonylmethyl, β-Sulfatoäthyl, Cyclohexyl, Phenyl, o-, m- oder p-Chlorphenyl, o-, m- oder p-Methylphenyl, p-Aethylphenyl, p-Methoxyphenyl, o-, m- oder p-Sulfophenyl, p-Carboxyphenyl und p-Sulfomethylphenyl. Bevorzugt sind gegebenenfalls substituierte Alkylreste mit 1 bis 4 Kohlenstoffatomen, insbesondere Methyl.

Als Rest Y kommt in Betracht: α,β-Dichloräthyl, α,β-Dibromäthyl, α-Chlorvinyl und α-Bromvinyl.

Die Farbstoffe der Formel (1) enthalten mindestens einen Rest der Formel (3), dieser ist faserreaktiv.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Erfindungsgemäss einsetzbare Reaktivfarbstoffe der Formel (1) sind bekannt. Sie können hergestellt werden, indem man einen Farbstoff der Formel

$$D - \left[ \begin{matrix} N - H \\ | \\ R \end{matrix} \right]_{1-2} \qquad (4)$$

oder ein Farbstoffvorprodukt mit mindestens ein Aequivalent eines Acylhalogenids der Formel

$$Hal - CO - Y \qquad (5) \quad ,$$

worin Hal ein Halogenatom ist, acyliert, wobei D, R und Y in den Formeln (4) und (5) die unter Formel (1) angegebenen Bedeutungen

haben, und dass man im Falle der Verwendung von Farbstoffvorprodukten, diese in die gewünschten Endfarbstoffe umwandelt.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesetzten Farbstoffes ist.

Beispiel für derartige, aus zwei oder mehr als zwei Komponenten zusammengesetzte Farbstoffe sind: Monoazo-, Disazo-, Trisazo-, Tetrazo-, Metallkomplexazo-, Formazan- und Azomethinfarbstoffe.

Handelt es sich z.B. um einen Azofarbstoff, kann man eine Diazokomponente, die ausser der zu diazotierenden Aminogruppe eine Gruppe -N(R)H enthält, oder eine Kupplungskomponente, die eine Gruppe -N(R)H enthält mit einem Acylhalogenid der Formel (5) umsetzen, und das erhaltene Produkt anschliessend durch Kupplung mit der anderen Komponente in den gewünschten Azofarbstoff überführen, und gegebenenfalls eine weitere Umwandlungsreaktion anschliessen.

Nach dieser Verfahrensvariante können Reaktivfarbstoffe der Formel (1), die zwei Reaktivreste enthalten, hergestellt werden, indem man eine Diazokomponente und eine Kupplungskomponente verwendet, die je eine Gruppe -N(R)H enthalten, und vor oder nach der Kupplung acyliert.

Farbstoffe der Formel (1), die zwei Reaktivreste enthalten, sind auch in der Weise herstellbar, dass man Farbstoffe der Formel (4) verwendet, die im Rest D bereits eine Gruppe der Formel (3) enthalten, oder die zwei Gruppen -N(R)H enthalten, und diese zusammen acyliert. Liegen in den hergestellten Reaktivfarbstoffen zur Metallkomplexbildung befähigte Gruppen vor, können die Reaktivfarbstoffe auch nachträglich metallisiert werden.

Vorzugsweise verwendet man als Ausgangsstoffe Farbstoffe der Formel (4), worin D der Rest eines Mono- oder Disazofarbstoffes ist.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste der Formel (3) enthalten, ausgeht, oder diese faserreaktiven Reste in hierfür geeignete Zwischenprodukte mit Farbstoffcharakter einführt.

Die Acylierung der Farbstoffe der Formel (4) oder der Farbstoffvorprodukte mit den Acylhalogeniden der Formel (5) erfolgt nach an sich bekannten Methoden, vorzugsweise in wässriger Lösung oder Suspension und in Gegenwart von alkalischen, säurebindenden Mitteln, z.B. wässriger Alkalihydroxide, -carbonate oder -bicarbonate.

Eine weitere Umwandlungsreaktion, die an die Synthese angeschloseen werden kann, ist beispielsweise, dass man einen Reaktivfarbstoff der Formel (1), worin der Rest der Formel (3) ein $\alpha,\beta$-Dibrompropionylamino-Rest ist, mit halogenwasserstoffabspaltenden Mitteln, wie Natriumhydroxid, behandelt, so dass die $\alpha,\beta$-Dibrompropionylgruppe in die $\alpha$-Bromacryloylgruppe umgewandelt wird.

Im folgenden sollen mögliche Ausgangsstoffe, die zur Herstellung der Reaktivfarbstoffe der Formel (1) verwendet werden können, einzeln genannt werden.

Als Farbstoffe der Formel (4) kommen besonders Farbstoffe der folgenden Strukturtypen in Betracht:

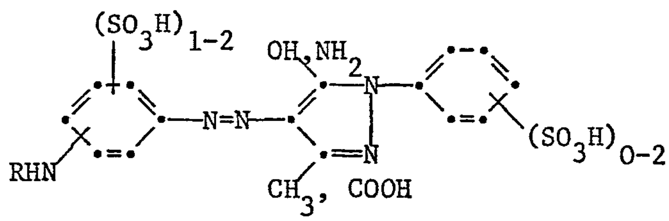

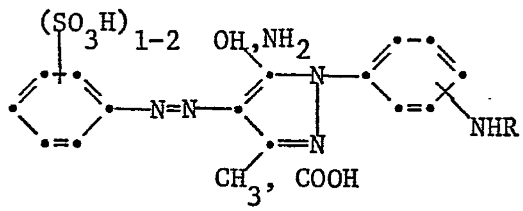

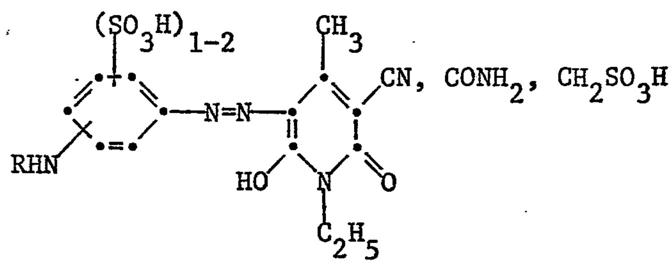

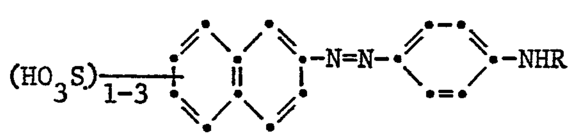

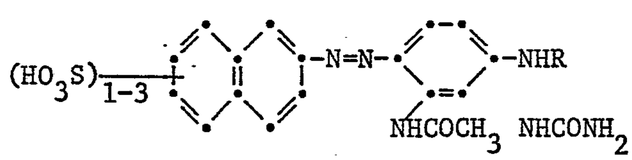

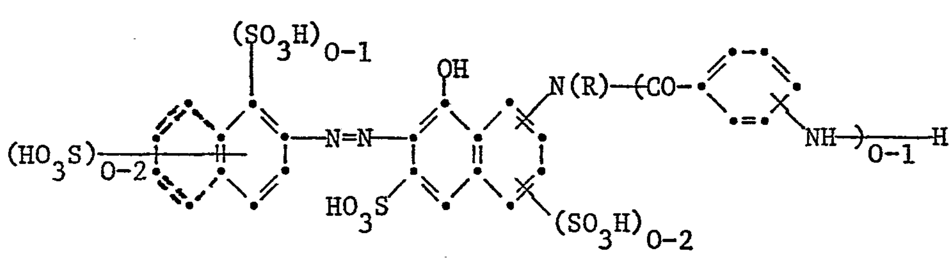

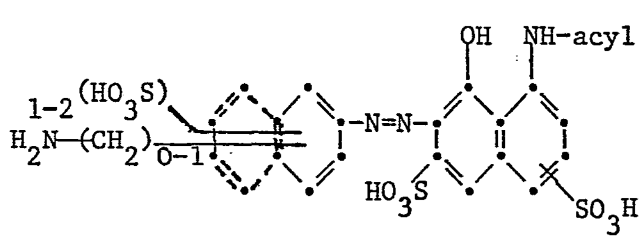

worin Acyl z.B. Acetyl oder gegebenenfalls substituiertes Benzoyl ist.

Metallkomplexe von Farbstoffen der Formeln:

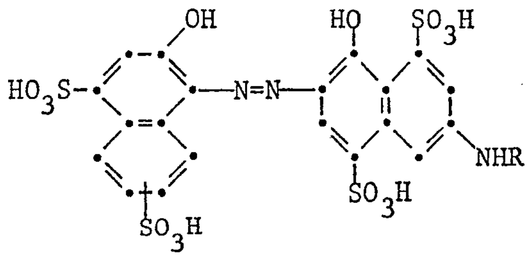

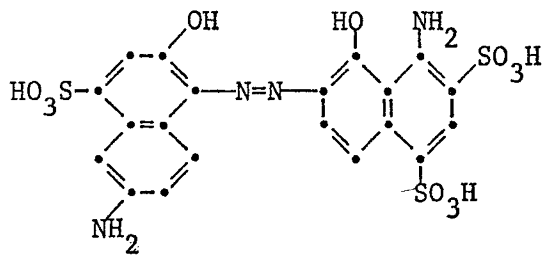

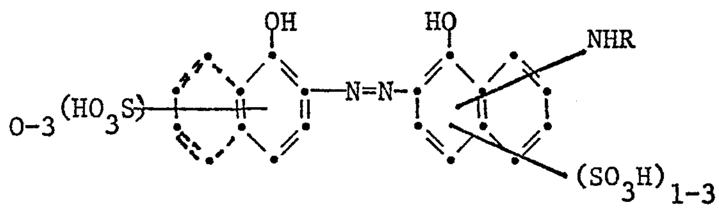

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

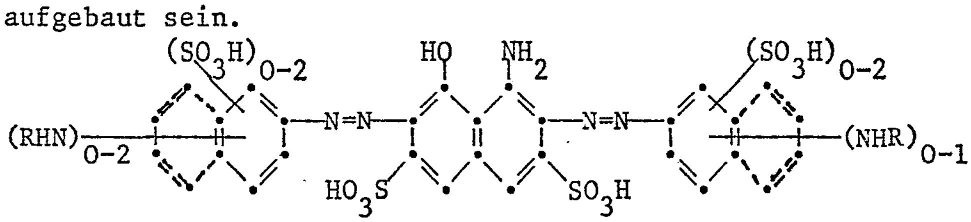

Die durch Strichelungen angedeuteten kondensierten Ringe stehen für alternativ mögliche Naphthalinsysteme.

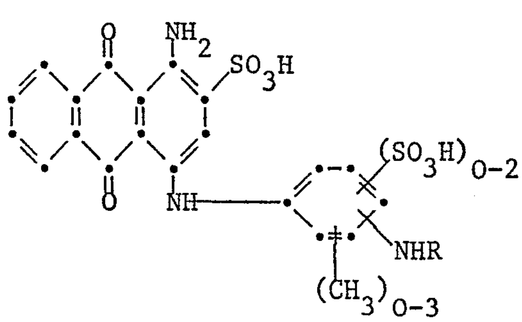

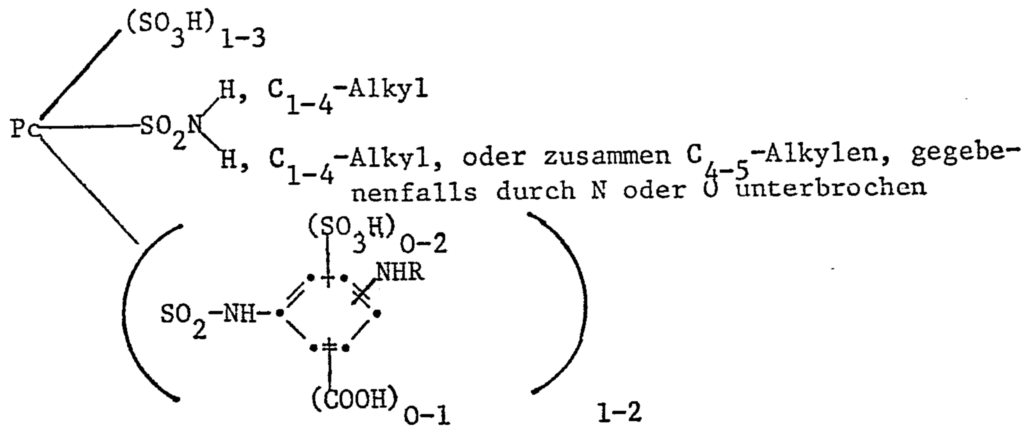

In dieser Formel steht Pc für den Cu- oder Ni-Phthalocyaninrest. Die Gesamtzahl der Substituenten am Pc-Gerüst ist dabei 4.

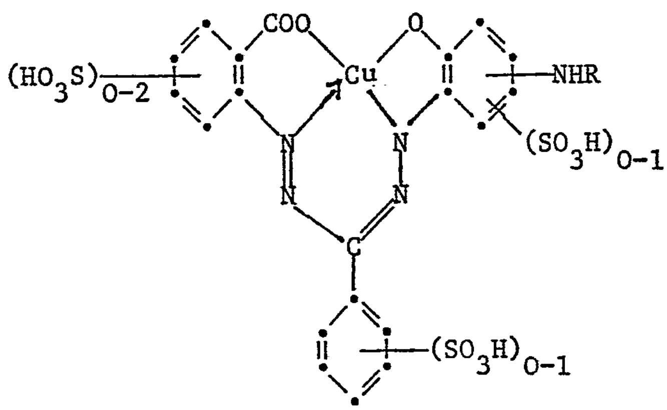

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel ( 4) sind die folgenden:

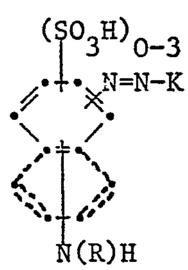

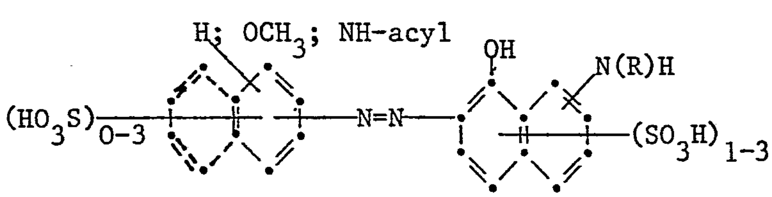

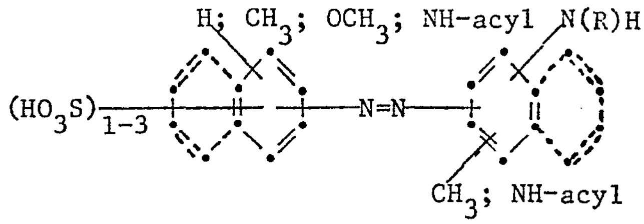

und

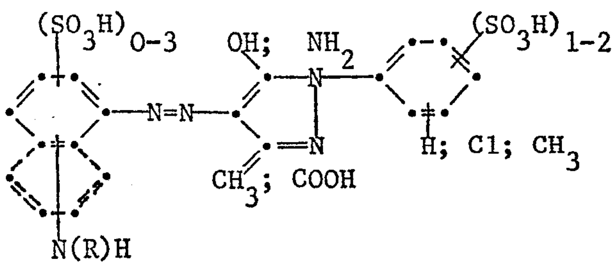

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebenen Bedeutungen hat, sowie die Metallkomplex-Azofarbstoffe der Formeln

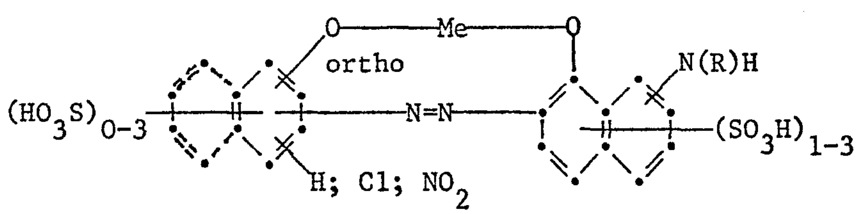

und

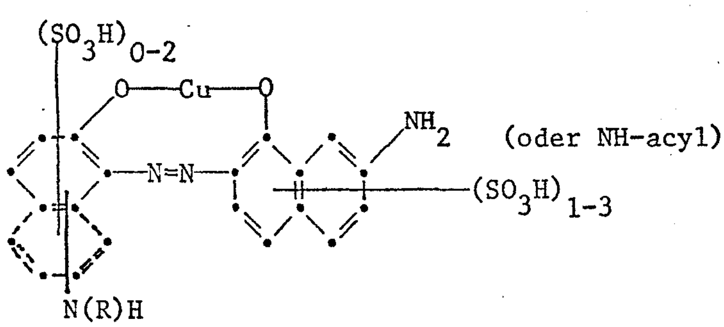

worin R und acyl die oben angegebenen Bedeutungen haben und Me für Cu, Cr oder Co steht.

Geht man zur Herstellung der bevorzugten Reaktivfarbstoffe der Formel (1), worin D der Rest eines Azofarbstoffes ist, nicht von den fertigen Aminofarbstoffen, z.B. solchen die weiter vorn beschrieben sind, sondern von Farbstoffvorprodukten, d.h. den Diazo- und Kupplungskomponenten aus, kommen beispielsweise die folgenden in Betracht:

Diazokomponenten:

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothiop-toluidin-sulfonsäure, 1-Amino-3-trifluormethylbenzol-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfonsäure, 1,4-Diaminobenzol-3-sulfonsäure, 1,4-Diaminobenzol-2,5-disulfonsäure, 1-Amino-3- oder -4-nitrobenzol-6-sulfonsäure, 1-Amino-

napthalin, 2- Aminonaphthalin, 1-Aminonapthalin-2-, -4-, -5-, -6-, -7- oder -8-sulfonsäure, 2-Aminonaphthalin-1-, -3-, -4-, -5-, -6-, -7- oder 8-sulfonsäure, 1-Amino-naphthalin-3,6- oder -5,7-disulfonsäure, 2-Aminonapthalin-
-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxy-naphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Kupplungskomponenten:

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6-oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6-oder 4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon,1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl—3—sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure.

Geht man von Farbstoffvorprodukten aus, muss mindestens eine der beiden Komponenten, die Diazokomponente oder die Kupplungskomponente eine acylierbare Aminogruppe aufweisen. Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Acylhalogenide der Formel (5):

α,β-Dibrompropionylchlorid,
α,β-Dichlorpropionylchlorid,
α-Bromacryloylchlorid,
α-Chloracryloylchlorid,
und gegebenenfalls auch gleichartig reagierende Halogensäureanhydride, wie α,β-Dichlorpropionsäure-anhydrid.

Nach dem erfindungsgemässen Verfahren wird das Färben oder Bedrucken in wässrigem Medium mit einem pH>7, d.h. in alkalischem Medium, vorgenommen. Die Ausführung gestaltet sich so, dass die Reaktivfarbstoffe der Formel (1) bei gewöhnlicher oder erhöhter Temperatur in Gegenwart alkalisch wirkender Mittel auf dem Fasermaterial fixiert werden. Vorzugsweise arbeitet man in einem wässrigen Medium mit einem pH>8.

Das erfindungsgemässe Verfahren dient zur Herstellung von Färbungen und Drucken von cellulosehaltigen Fasermaterialien aller Art. Solche Fasermaterialien sind beispielsweise die natürliche Cellulosefaser, wie Baumwolle, Leinen und Hanf, sowie Zellstoff und regenerierte Cellulose. Das erfindungsgemässe Verfahren ist auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäss verwendeten Farbstoffe lassen sich auf verschiedene Weise auf das Fasermaterial applizieren und auf der Faser fixieren, insbesondere in Form von wässrigen Farbstofflösungen und -druckpasten.

Zur Durchführung des erfindungsgemässen Verfahrens im alkalischen pH-Bereich werden als alkalische säurebindende Mittel beispielsweise Natriumhydroxyd, Kaliumhydroxyd oder ein Alkalisalz einer schwachen Säure, wie Natriumcarbonat oder -bicarbonat, Trinatriumphosphat, Dinatriumphosphat, Natriumsilikat oder trichloressigsaures Natrium oder Mischungen aus diesen säurebindenden Mitteln verwendet.

Die den Farbstoff und das säurebindende Mittel enthaltenden Färbeflotten und Druckpasten können innerhalb eines breiten Temperaturbereiches auf das zu färbende Material aufgebracht werden, vorzugsweise bei Raumtemperatur, 15 bis 30°C, oder bei Temperaturen bis zu 60°C. Man geht zweckmässigerweise so vor, dass man das Fasergut mit den Färbeflotten, die gegebenenfalls neutrale Salze enthalten, imprägniert und abquetscht, beispielsweise auf üblichem Wege foulardiert, und es, gegebenenfalls nach vorhergehender Zwischentrocknung, zwecks Fixierung der Farbstoffe einer Alkalibehandlung oder in Gegenwart von Alkali einer Hitzebehandlung unterwirft. In ähnlicher Weise erzeugt man Drucke, indem man das Fasermaterial mit den genannten Druckpasten bedruckt, zwischentrocknet und es zur Fixierung der Farbstoffe einer Hitzebehandlung unterwirft.

Erfolgt das Färben nach dem Ausziehverfahren, so enthält das Färbebad eines oder mehrere der oben genannten säurebindenden Mittel und gegebenenfalls die üblichen Zusätze, wie anorganische Salze, Harnstoff oder andere weiter unten genannte Hilfsmittel. Die Ware wird mit den wässrigen, gegebenenfalls salzhaltigen Farbstofflösungen

imprägniert, und die Farbstoffe werden nach einer Alkalibehandlung oder in Gegenwart von Alkali, gegebenenfalls unter Wärmeeinwirkung fixiert.

In Abhängigkeit von der Konzentration und der Art des säurebindenden Mittels ist es auch möglich die Fixierung der Farbstoffe bei Raumtemperatur oder bei etwas erhöhter Temperatur, beispielsweise bei 20 bis 60°C, durchzuführen. Nach diesem sogenannten Kaltverweilverfahren wird z.B. der Farbstoff zusammen mit dem Alkali auf dem Foulard aufgebracht und dann durch mehrstündiges Lagern der imprägnierten oder bedruckten feuchten Ware bei Raumtemperatur fixiert.

Die Fixierung der Färbungen und Drucke im alkalischen Bereich durch Hitzebehandlung kann nach verschiedenen, in der Technik üblichen Methoden erfolgen, beispielsweise durch Dämpfen mit Sattdampf bei ca. 100 bis 103°C (Pad-steam-Verfahren) oder mit überhitztem Wasserdampf bei Temperaturen bis 150°C, mit Heissluft bei Temperaturen von 120 bis 230°C (Thermofixier-Verfahren), durch Infrarotbestrahlung, durch Hindurchführen durch heisse, stark salzhaltige Lösungen, durch heisse Dämpfe indifferenter organischer Lösungsmittel oder durch Hinüberleiten der geklotzten oder bedruckten Stoffbahn über eine Reihe beheizter Walzen.

Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Färbeflotten und Druckpasten können ausser dem Alkali die allgemein üblichen Zusätze enthalten, die Lösungen beispielsweise anorganische Salze, wie Alkalichloride oder Alkalisulfate, Harnstoff, Alginatverdickungen, wasserlösliche Cellulosealkyläther sowie Dispergierungs- und Egalisierhilfsmittel, die Druckpasten beispielsweise Harnstoff, Natrium-m-nitrobenzolsulfonat und die üblichen Verdickungsmittel, wie Methylcellulose, Stärkeäther, Emulsionsverdickungen oder vorzugsweise ein Alginat, z.B. Natriumalginat.

Das alkalische säurebindende Mittel kann auch vor oder nach der Applikation der Färbeflotten oder Druckpasten, die dann dieses Mittel nicht enthalten, auf das Fasermaterial aufgebracht werden, beispielsweise durch Aufsprühen oder Klotzen einer wässrigen Lösung des Mittels. Die Lösungen dieser Mittel können allgemein übliche Zusätze enthalten, wie sie beispielsweise oben bereits genannt wurden. Werden diese Mittel gleichzeitig mit dem Farbstoff auf das zu färbende Material appliziert, so ist es zweckmässig, sie in der Färbeflotte oder in der den Farbstoff enthaltenden Druckpaste zu lösen.

Das erfindungsgemässe Verfahren wird vorzugsweise nach der Auszieh-, Kaltverweil- oder Pad-steam-Methode ausgeführt.

Eine bevorzugte Ausführungsform des erfindungsgemässen Verfahrens zum Bedrucken von cellulosehaltigem Fasermaterial ist dadurch gekennzeichnet, dass man eine wässrige Druckpaste mit einem pH von 8 bis 9 verwendet.

Eine weitere bevorzugte Ausführungsform zum Färben von cellulosehaltigem Fasermaterial ist dadurch gekennzeichnet, dass man die Färbung in wässriger Lösung bei einem pH von 11 bis 13 ausführt.

Das erfindungsgemässe Verfahren kann nach der Ausziehmethode bei niedrigen Färbetemperaturen ausgeübt werden und erfordert beim Pad-steam-Verfahren nur kurze Dämpfzeiten. Es werden hohe Fixierwerte erhalten, wobei die Differenz zwischen Ausziehgrad und Fixiergrad klein, d.h. der Seifverlust gering ist.

Die mit den erfindungsgemäss zur Anwendung gelangenden Farbstoffen hergestellten Färbungen und Drucke zeichnen sich durch klare Nuancen aus. Insbesondere besitzen die Färbungen und Drucke auf Cellulosefasermaterialien eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

<u>Beispiel 1:</u> 2 Teile des Reaktivfarbstoffes der Formel

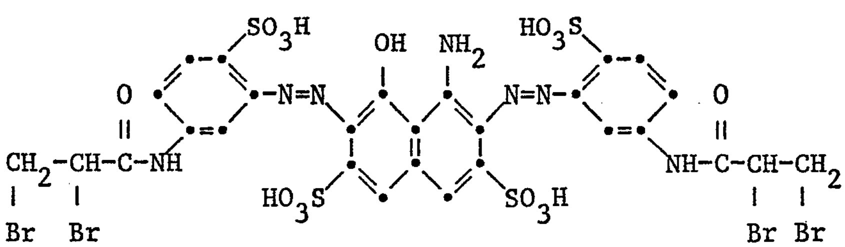

(Herstellung nachfolgend beschrieben) werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet. Man erhält

eine marineblaue Färbung mit guten Echtheitseigenschaften.

Beispiel 2: 2 Teile des in Beispiel 1 verwendeten Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet. Man erhält eine marineblaue Färbung mit guten Echtheitseigenschaften.

Beispiel 3: 8 Teile des in Beispiel 1 verwendeten Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet. Man erhält eine schwarze Färbung mit guten Echtheitseigenschaften.

Beispiel 4: 4 Teile des in Beispiel 1 verwendeten Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule

aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine marineblaue Färbung mit guten Echtheitseigenschaften.

Beispiel 5: 6 Teile des in Beispiel 1 verwendeten Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine schwarze Färbung mit guten Echtheitseigenschaften.

Beispiel 6: 2 Teile des in Beispiel 1 verwendeten Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichts zunimmt, und dann getrocknet. Dann imprägniert man das Gewebe mit einer 20°C warmen Lösung, die pro Liter 4 Gramm Natriumhydroxyd und 300 Gramm Natriumchlorid enthält, quetscht auf 75 % Gewichtszunahme ab, dämpft die Färbung während 30 Sekunden bei 100 bis 102°C spült, seift während einer Viertelstunde in einer 0,3 %igen kochenden Lösung eines nichtionogenen Waschmittels, spült und trocknet. Man erhält eine marineblaue Färbung mit guten Echtheitseigenschaften.

Beispiel 7: 3 Teile des in Beispiel 1 verwendeten Reaktivfarbstoffes werden unter schnellem Rühren in 100 Teile einer Stammverdickung, enthaltend 50 Teile 5-%ige Natriumalginatverdickung, 27,8 Teile Wasser, 20 Teile Harnstoff, 1 Teil m-nitrobenzolsulfonsaures Natrium sowie

1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet. Man erhält einen marineblauen Druck mit guten Echtheitseigenschaften.

Beispiel 8: 5 Teile des in Beispiel 1 verwendeten Reaktivfarbstoffes werden unter schnellem Rühren in 100 Teile einer Stammverdickung, enthaltend 50 Teile 5-%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet. Man erhält einen schwarzen Druck mit guten Echtheitseigenschaften.

Beispiel 9: 7 Teile des in Beispiel 1 verwendeten Reaktivfarbstoffes werden in 50 Teilen Wasser gelöst. Dazu gibt man 50 Teile einer Lösung, die pro Liter 24 g Natriumhydroxyd, 0,04 Liter Wasserglas (38°Bé) und 20 g Harnstoff enthält. Mit der erhaltenen Lösung wird ein Baumwollgewebe foulardiert, so dass es um 70% seines Gewichtes zunimmt. Das Baumwollgewebe wird so getrocknet (zum Beispiel: 90 Sekunden Trockenhitze bei 100°C) und 30 bis 60 Sekunden bei 102°C im Sattdampf gedämpft. Danach wird die gefärbte Ware gespült, während einer Viertelstunde mit einem nichtionogenen Waschmittel kochend geseift, nochmals gespült und getrocknet. Man erhält eine schwarze Färbung mit guten Echtheitseigenschaften.

Herstellungsvorschrift 1 des in Beispiel 1 verwendeten Reaktivfarbstoffes

43,1 Teile des aminogruppenhaltigen Chromophors der Formel

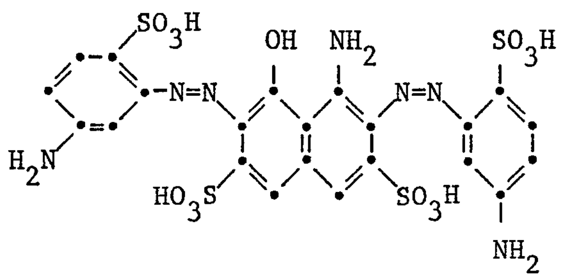

werden in 550 Teilen Wasser neutral gelöst und die Lösung auf 10°C abgekühlt. Bei dieser Temperatur werden 33,0 Teile 2,3-Dibrompropionylchlorid innert 30 Minuten zugetropft, wobei der pH der Reaktionsmischung durch gleichzeitige Zugabe von 2 n Natriumhydroxydlösung bei 6,5 bis 7,0 gehalten wird. Nach vollständiger Reaktion wird die Reaktionsmischung geklärt und der gebildete Reaktivfarbstoff bei pH 6,5 durch Einstreuen von Kaliumchlorid ausgesalzen, filtriert, gewaschen und im Vakuum getrocknet.

Weitere Reaktivfarbstoffe, die nach den in den Beispielen beschriebenen Färbe- beziehungsweise Druckvorschriften Färbungen beziehungsweise Drucke in dem in Tabelle 1 Spalte 3 angegebenen Farbton mit guten Echtheitseigenschaften ergeben, werden erhalten, wenn man gemäss den Angaben in der Herstellungsvorschrift 1 die in Spalte 2 angegebenen aminogruppenhaltigen Chromophore mit einem Aequivalent 2,3-Dibrompropionylchlorid pro acylierbare Aminogruppe oder mit einem Aequivalent 2,3-Dichlorpropionylchlorid pro acylierbare Aminogruppe umsetzt.

Tabelle 1

| Nr. | Chromophor | Farbton auf Baumwolle |
|---|---|---|
| 1 | 2-Aminonaphthalin-3,6,8-trisulfonsäure ⟶ 1-Amino-3-methylbenzol | rotstichig-gelb |
| 2 | 2-Aminonaphthalin-3,6,8-trisulfonsäure ⟶ 3-Aminophenylharnstoff | rotstichig-gelb |
| 3 | 2-Aminonaphthalin-4,6,8-trisulfonsäure ⟶ 1-Amino-3-methylbenzol | rotstichig-gelb |
| 4 | 2-Aminonaphthalin-4,6,8-trisulfonsäure ⟶ 1-Amino-3-acetylaminobenzol | rotstichig-gelb |
| 5 | 1-Amino-4-(2',5'-disulfophenylazo)-naphthalin-6-sulfonsäure ⟶ 1-Amino-3-methylbenzol | braun |
| 6 | 1-Amino-4-(2',5'-disulfophenylazo)-naphthalin-6-sulfonsäure ⟶ 1-Aminonaphthalin-6-sulfonsäure | braun |
| 7 | 1-Amino-4-(4'-sulfophenylazo)-benzol-2-sulfonsäure ⟶ 1-Aminonaphthalin-6-sulfonsäure | braun |
| 8 | 1-Amino-4-(4',6',8'-trisulfonaphthyl-2'-azo)-naphthalin-6-sulfonsäure ⟶ 1-Amino-3-methylbenzol | braun |
| 9 | 1-Amino-4-(2',5'-disulfophenylazo)-naphthalin-6-sulfonsäure ⟶ 1-Amino-2,5-dimethylbenzol | braun |
| 10 | 1-Amino-3-acetylaminobenzol-6-sulfonsäure ⟶ 1-Aethyl-3-sulfomethyl-4-methyl-6-hydroxy-pyridon-(2)-5-carbonsäureamid (verseift) | gelb |
| 11 | 1-Amino-3-acetylaminobenzol-6-sulfonsäure ⟶ 1-Aethyl-3-aminocarbonyl-4-methyl-6-hydroxy-pyridon-(2) (verseift) | gelb |
| 12 | 1-Amino-3-acetylaminobenzol-6-sulfonsäure ⟶ 1-(2'-Methyl-4'-sulfophenyl)-3-carboxy-pyrazolon-(5) (verseift) | gelb |
| 13 | 1-Amino-3-acetylaminobenzol-6-sulfonsäure ⟶ 1-(4',8'-Disulfonaphthyl-[2'])-3-methyl-pyrazolon-(5) (verseift) | gelb |
| 14 | 2-Aminonaphthalin-1,5-disulfonsäure ⟶ 2-Acetylamino-5-hydroxynaphthalin-7-sulfonsäure (verseift) | orange |
| 15 | 2-Aminonaphthalin-3,6,8-trisulfonsäure ⟶ 2-Acetylamino-5-hydroxynaphthalin-7-sulfonsäure (verseift) | orange |

Tabelle 1 (Fortsetzung)

| Nr. | Chromophor | Farbton auf Baumwolle |
|---|---|---|
| 16 | 2-Aminonaphthalin-1,5,7-trisulfonsäure ⟶ 1-Acetylamino-5-hydroxynaphthalin-7-sulfonsäure (verseift) | orange |
| 17 | 1-Amino-4-methoxybenzol-2,5-disulfonsäure ⟶ 2-Amino-5-hydroxynaphthalin-7-sulfonsäure | scharlach |
| 18 | 1-Amino-4-methoxybenzol-2-sulfonsäure ⟶ 2-Amino-5-hydroxynaphthalin-7-sulfonsäure | scharlach |
| 19 | 1-Amino-4-methoxybenzol-2-sulfonsäure ⟶ 2-Methylamino-5-hydroxynaphthalin-7-sulfonsäure | scharlach |
| 20 | 1-Aminobenzol-2-sulfonsäure ⟶ 1-(4'-Nitrobenzoylamino)-8-hydroxynaphthalin-3,6-disulfonsäure (reduziert) | rot |
| 21 | 1-Amino-3-acetylaminobenzol-6-sulfonsäure ⟶ 1-Benzoylamino-8-hydroxynaphthalin-3,6-disulfonsäure, (verseift) | blaustichig-rot |
| 22 | 1-Amino-3-acetylaminobenzol-6-sulfonsäure ⟶ 1-Acetylamino-8-hydroxynaphthalin-3,6-disulfonsäure (verseift) | blaustichig-rot |
| 23 | 1-Amino-3-acetylaminobenzol-6-sulfonsäure ⟶ 1-Benzoylamino-8-hydroxynphathalin-4,6-disulfonsäure (verseift) | blaustichig-rot |
| 24 | 1-Amino-3-acetylaminobenzol-6-sulfonsäure ⟶ 1-Acetylamino-8-hydroxynaphthalin-4,6-disulfonsäure (verseift) | blaustichig rot |
| 25 | 1-Amino-4-acetylaminobenzol-2-sulfonsäure ⟶ saure 2-Amino-8-hydroxynaphthalin-3,6-disulfonsäure, (verseift) | blaustichig rot |
| 26 | 1-Amino-4-acetylaminobenzol-2-sulfonsäure ⟶ 2-Amino-8-hydroxynaphthalin-6-sulfonsäure, (sauer gekuppelt, verseift) | blaustichig rot |
| 27 | 3-Methoxy-4-amino-6-methylazobenzol-2',5'-disulfonsäure ⟶ 2-Methylamino-5-hydroxynaphthalin-7-sulfonsäure (entmethylierend gekupfert) | marineblau |
| 28 | 3-Methoxy-4-amino-6-methylazobenzol-2',4'-disulfonsäure ⟶ 2-Amino-5-hydroxynaphthalin-1,7-disulfonsäure (entmethylierend gekupfert) | marineblau |
| 29 | 1-Amino-3-acetylaminobenzol-6-sulfonsäure ⟶ 1-Amino-8-hydroxy-2-(4'-sulfophenylazo)-naphthalin-3,6-disulfonsäure (verseift) | blau |

Tabelle 1 (Fortsetzung)

| Nr. | Chromophor | Farbton auf Baumwolle |
|---|---|---|
| 30 | 1-Amino-3-acetylaminobenzol-6-sulfonsäure ⟶ 1-Amino-8-hydroxy-2-(4'-aminosulfonyl-phenylazo)-naphthalin-3,6-disulfonsäure (verseift) | blau |
| 31 | 1-Amino-3-acetylaminobenzol-6-sulfonsäure ⟶ 1-Amino-8-hydroxy-2-(4'-methylsulfonyl-phenylazo)-naphthalin-3,6-disulfonsäure (verseift) | blau |
| 32 | 1-Amino-3-acetylaminobenzol-6-sulfonsäure ⟶ 1-Amino-8-hydroxy-2-(2',5'-disulfophenylazo)-naphthalin-3,6-disulfonsäure (verseift) | blau |
| 33 | 1-Amino-4-aminosulfonylbenzol ⟶ 1-Amino-8-hydroxy-2-(3'-acetylamino-6'-sulfophenylazo)-naphthalin-3,6-disulfonsäure (verseift) | grünstichig blau |
| 34 | 1-Amino-4-methylsulfonyl-benzol ⟶ 1-Amino-8-hydroxy-2-(3'-acetylamino-6'-sulfophenylazo)-naphthalin-3,6-disulfonsäure (verseift) | grünstichig blau |
| 35 | 1-Aminobenzol-2,5-disulfonsäure ⟶ 1-Amino-8-hydroxy-2-(3'-acetylamino-6'-sulfophenylazo)-naphthalin-3,6-disulfonsäure (verseift) | grünstichig blau |
| 36 | N-(2-Carboxy-4-sulfophenyl)-N'-(2-hydroxy-3'-amino-5'-sulfophenyl)-ms-phenylformazan (Cu-Komplex) | blau |
| 37 | N-(2-Carboxy-5-sulfophenyl)-N'-(2'-hydroxy-3'-amino-5'-sulfophenyl)-ms-phenylformazan (Cu-Komplex) | blau |

Tabelle 1 (Fortsetzung)

| Nr. | Chromophor | Farbton auf Baumwolle |
|---|---|---|
| 38 | 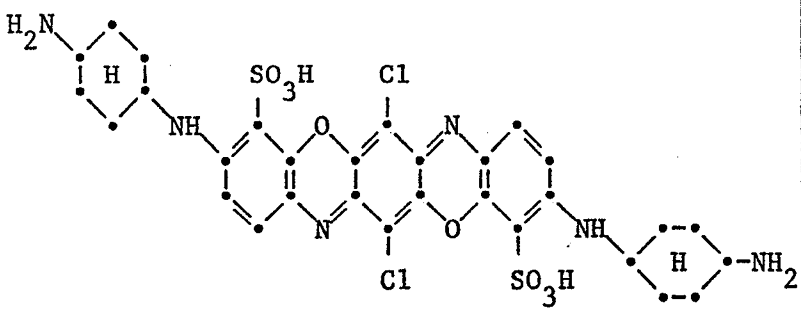 | blau |
| 39 | 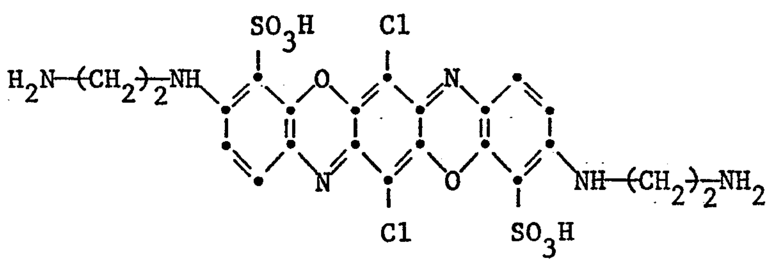 | blau |
| 40 | 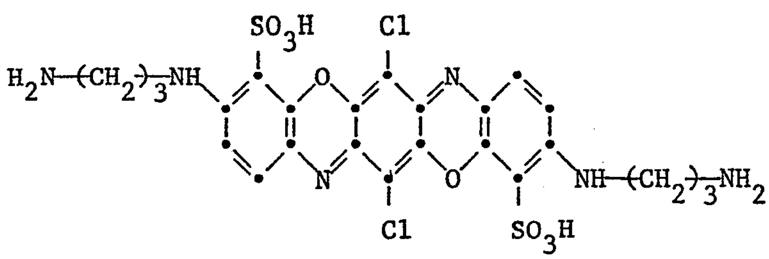 | blau |
| 41 | 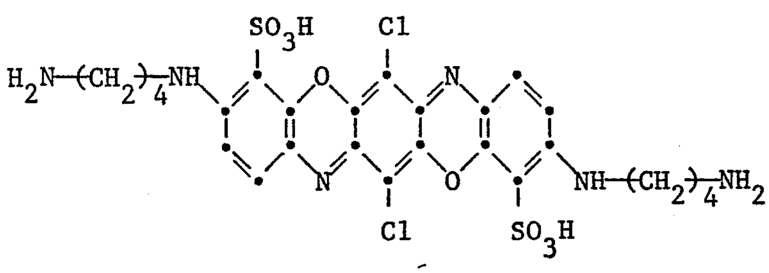 | blau |

Tabelle 1 (Fortsetzung)

| Nr. | Chromophor | Farbton auf Baumwolle |
|---|---|---|
| 42 | CuPc-(3) 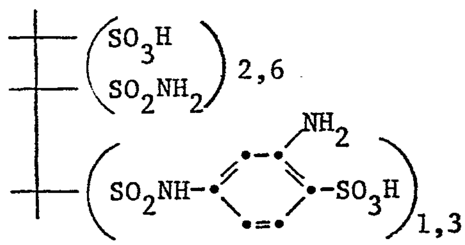 | türkisblau |
| 43 | CuPc-(4) 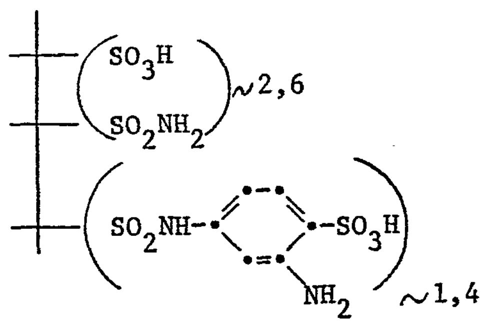 | türkisblau |
| 44 | CuPc-(3) 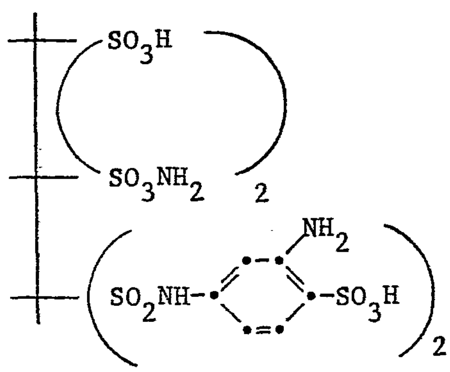 | türkisblau |
| 45 | NiPc(4) 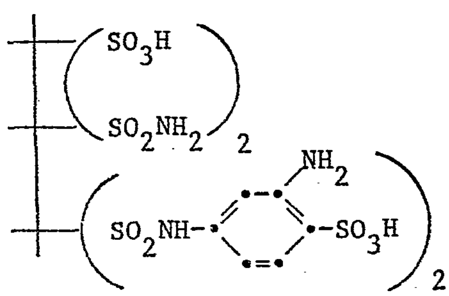 | türkisblau |

Tabelle 1 (Fortsetzung)

| Nr. | Chromophor | Farbton auf Baumwolle |
|---|---|---|
| 46 | CuPc(3) 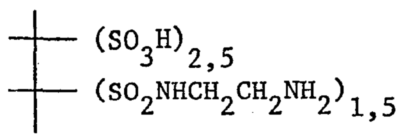 | türkisblau |
| 47 | CuPc-(3) 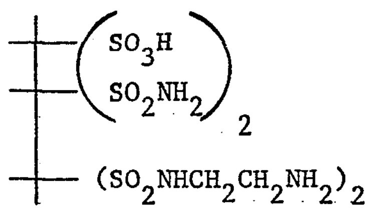 | türkisblau |

Herstellungsvorschrift 2 des in Beispiel 1 verwendeten Reaktivfarbstoffes

Zu 73,2 Teilen der in 600 Teilen Wasser gelösten Kupplungskomponente der Formel

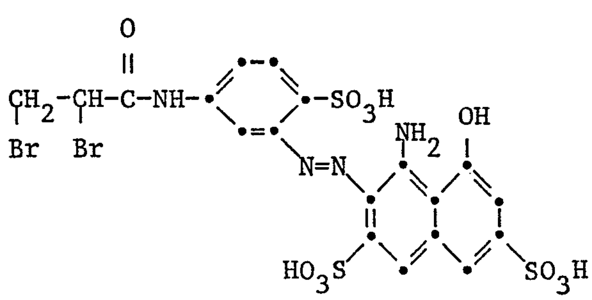

(hergestellt durch saure Kupplung von diazotierter 1-Amino-5-(2,3-dibrompropionylamino)-benzol-2-sulfonsäure auf 1-Amino-8-hydroxynaphthalin-3,6-disulfonsäure) wird bei 0 bis 5°C eine Mischung von 40,2 Teilen diazotierter 1-Amino-5-(2,3-dibrompropionylamino)-benzol-2-sulfonsäure mit 200 Teilen Wasser gegeben. Nach vollständiger Kupplungsreaktion bei pH 5 bis 7 wird der gebildete Reaktivfarbstoff wie in der Herstellungsvorschrift 1 angegeben isoliert.

Weitere Reaktivfarbstoffe, die nach den in den Beispielen beschriebenen Färbe- beziehungsweise Druckvorschriften Färbungen beziehungsweise Drucke in dem in Tabelle 2 Spalte 4 angegebenen Farbton mit guten Echtheitseigenschaften ergeben, werden erhalten, wenn man gemäss den Angaben in der Herstellungsvorschrift 2 auf die in Spalte 2 angegebenen Kupplungskomponenten die in Spalte 3 angegebenen diazotierten Diazokomponenten kuppelt.

Tabelle 2

| Nr. | Kupplungskomponente | Diazokomponente | Farbton auf Baumwolle |
|---|---|---|---|
| 1 | 1-Aethyl-3-aminocarbonyl-4-methyl-6-hydroxy-pyridon-(2) | 1-Amino-5-(2,3-dibrom-propionylamino)-benzol-2-sulfonsäure | gelb |
| 2 | 1-Amino-5-(2,3-dibrom-propionylamino)-benzol-2-sulfonsäure | 1-Amino-5-(2,3-dibrom-propionylamino)-benzol-2-sulfonsäure | rotstichig gelb |
| 3 | 2-(N-Methyl-N-2,3-dibrom-propionyl)-amino-5-hydroxynaphthalin-7-sulfonsäure | 1-Amino-5-(2,3-dibrom-propionylamino)-benzol-2-sulfonsäure | orange |
| 4 | 2-(2,3-Dibrompropionyl)-amino-5-hydroxy-naphthalin-7-sulfonsäure | 1-Amino-5-(2,3-dibrom-propionylamino)-benzol-2-sulfonsäure | orange |
| 5 | 3-(2,3-Dibrompropionyl)-amino-5-hydroxy-naphthalin-7-sulfonsäure | 1-Amino-5-(2,3-dibrom-propionylamino)-benzol-2-sulfonsäure | rotstichig orange |
| 6 | 1-Acetylamino-8-hydroxy-naphthalin-4,6-disulfonsäure | 1-Amino-5-(2,3-dibrom-propionylamino)-benzol-2-sulfonsäure | rot |
| 7 | 1-(α-Bromacryloyl-amino)-8-hydroxy-naphthalin-3,6-disulfonsäure | 1-Amino-5-(2,3-dibrom-propionylamino)-benzol-2-sulfonsäure | rot |

Tabelle 2 (Fortsetzung)

| Nr. | Kupplungskomponente | Diazokomponente | Farbton auf Baumwolle |
|---|---|---|---|
| 8 | 1-Benzoylamino-8-hydroxy-naphthalin-4,6-disulfonsäure | 1-Amino-5-(2,3-dibrom-propionylamino)-benzol-2-sulfonsäure | rot |
| 9 | 1-(3-(2,3-Dibrompropionyl)-amino)-benzoylamino-8-hydroxynaphthalin-4,6-disulfonsäure | 1-Amino-5-(2,3-dibrom-propionylamino)-benzol-2-sulfonsäure | rot |
| 10 | 1-(4-(2,3-Dibrompropionyl)-amino)-benzoylamino-8-hydroxynaphthalin-4,6-disulfonsäure | 1-Amino-5-(2,3-dibrom-propionylamino)-benzol-2-sulfonsäure | rot |
| 11 | 1-Acetylamino-8-hydroxy-naphthalin-3,6-disulfonsäure | 1-Amino-5-(2,3-dibrom-propionylamino)-benzol-2-sulfonsäure | blaustichig rot |
| 12 | 1-Benzoylamino-8-hydroxy-naphthalin-3,6-disulfonsäure | 1-Amino-5-(2,3-dibrom-propionylamino)-benzol-2-sulfonsäure | blaustichig rot |
| 13 | 1-(3-(2,3-Dibrompropionyl)-amino)-benzoylamino-8-hydroxynaphthalin-3,6-disulfonsäure | 1-Amino-5-(2,3-dibrom-propionylamino)-benzol-2-sulfonsäure | blaustichig rot |
| 14 | 1-(4-(2,3-Dibrompropionyl)-amino)-benzoylamino-8-hydroxynaphthalin-3,6-disulfonsäure | 1-Amino-5-(2,3-dibrom-propionylamino)-benzol-2-sulfonsäure | blaustichig rot |
| 15 | 1-Amino-8-hydroxy-2-(4'-(2,3-dibrompropionyl)-amino-2'-sulfophenylazo)-naphthalin-3,6-disulfonsäure | 1-Amino-4-(2,3-dibrom-propionylamino)-benzol-2-sulfonsäure | grünstichig blau |

Tabelle 2 (Fortsetzung)

| Nr. | Kupplungskomponente | Diazokomponente | Farbton auf Baumwolle |
|---|---|---|---|
| 16 | 1-Amino-8-hydroxy-2-(3'-(2,3-dibrompropionyl)-amino-4',6'-disulfophenyl-azo)-naphthalin-3,6-di-sulfonsäure | 1-Amino-3-(2,3-dibrom-propionylamino)-benzol-4,6-disulfonsäure | blau |
| 17 | do. | 1-Amino-5-(2,3-dibrom-propionylamino)-benzol-2-sulfonsäure | blau |
| 18 | 1-Amino-8-hydroxy-2-(3'-(2,3-dibrompropionyl)-amino-6'-sulfophenylazo)-naphthalin-3,6-disulfon-säure | 1-Amino-3-(2,3-dibrom -propionylamino)-benzol-4,6-disulfonsäure | blau |
| 19 | do. | 1-Amino-4-(2,3-dibrom-propionylamino)-benzol-2-sulfonsäure | grünstichig blau |
| 20 | do. | 1-Amino-4-(2,3-dibrom-propionylamino)-benzol-2,5-disulfonsäure | grünstichig blau |
| 21 | 1-Amino-8-hydroxy-2-(3'-(2,3-dibrompropionyl)-amino-4',6'-disulfo-phenylazo)-naphthalin-3,6-disulfonsäure | 1-Amino-4-(2,3-dibrom-propionylamino)-benzol-2-sulfonsäure | grünstichig blau |
| 22 | do. | 1-Amino-4-(2,3-dibrom-propionylamino)-benzol-2,5-disulfonsäure | grünstichig blau |
| 23 | 1-Aethyl-3-aminocarbonyl-4-methyl-6-hydroxy-pyridon-(2) | 1-Amino-5-(2,3-dichlor-propionylamino)-benzol-2-sulfonsäure | gelb |
| 24 | 1-Amino-5-(2,3-dichlor-propionylamino)-benzol-2-sulfonsäure | 1-Amino-5-(2,3-dichlor-propionylamino)-benzol-2-sulfonsäure | rotstichig gelb |
| 25 | 2-(N-Methyl-N-2,3-dichlor-propionyl)-amino-5-hydroxynaphthalin-7-sulfonsäure | 1-Amino-5-(2,3-dichlor-propionylamino)-benzol-2-sulfonsäure | orange |

Tabelle 2 (Fortsetzung)

| Nr. | Kupplungskomponente | Diazokomponente | Farbton auf Baumwolle |
|---|---|---|---|
| 26 | 2-(2,3-Dichlor-propionyl-amino)-5-hydroxynaphthalin-7-sulfonsäure | 1-Amino-5-(2,3-dichlor-propionylamino)-benzol-2-sulfonsäure | orange |
| 27 | 3-(2,3-Dichlor-propionyl-amino)-5-hydroxy-naphthalin-7-sulfonsäure | 1-Amino-5-(2,3-dichlor-propionylamino)-benzol-2-sulfonsäure | rotstichig orange |
| 28 | 1-Acetylamino-8-hydroxy-naphthalin-4,6-disulfon-säure | 1-Amino-5-(2,3-dichlor-propionylamino)-benzol-2-sulfonsäure | rot |
| 29 | 1-(α-Chloracryloylamino)-8-hydroxynaphthalin-3,6-disulfonsäure | 1-Amino-5-(2,3-dichlor-propionylamino)-benzol-2-sulfonsäure | rot |
| 30 | 1-Benzoylamino-8-hydroxy-naphthalin-4,6-disulfon-säure | 1-Amino-5-(2,3-dichlor-propionylamino)-benzol-2-sulfonsäure | rot |
| 31 | 1-(3-(2,3-Dichlorpropio-nyl)-amino)-benzoylamino-8-hydroxynaphthalin-4,6-disulfonsäure | 1-Amino-5-(2,3-dichlor-propionylamino)-benzol-2-sulfonsäure | rot |
| 32 | 1-(4-(2,3-Dichlorpropio-nyl)-amino)-benzoylamino-8-hydroxynaphthalin-4,6-disulfonsäure | 1-Amino-5-(2,3-dichlor-propionylamino)-benzol-2-sulfonsäure | rot |
| 33 | 1-Acetylamino-8-hydroxy-naphthalin-3,6-disulfon-säure | 1-Amino-5-(2,3-dichlor-propionylamino)-benzol-2-sulfonsäure | blaustichig rot |
| 34 | 1-Benzoylamino-8-hydroxy-naphthalin-3,6-disulfon-säure | 1-Amino-5-(2,3-dichlor-propionylamino)-benzol-2-sulfonsäure | blaustichig rot |
| 35 | 1-(3-(2,3-Dichlorpropio-nyl)-amino)-benzoylamino-8-hydroxynaphthalin-3,6-disulfonsäure | 1-Amino-5-(2,3-dichlor-propionylamino)-benzol-2-sulfonsäure | blaustichig rot |
| 36 | 1-(4-(2,3-Dichlorpropio-nyl)-amino)-benzoylamino-8-hydroxynaphthalin-3,6-disulfonsäure | 1-Amino-5-(2,3-dichlor-propionylamino)-benzol-2-sulfonsäure | blaustichig rot |

Tabelle 2 (Fortsetzung)

| Nr. | Kupplungskomponente | Diazokomponente | Farbton auf Baumwolle |
|---|---|---|---|
| 37 | 1-Amino-8-hydroxy-2-(4'-(2,3-dichlorpropionyl)-amino-2'-sulfophenylazo)-naphthalin-3,6-disulfonsäure | 1-Amino-4-(2,3-dichlorpropionylamino)-benzol-2-sulfonsäure | grünstichig blau |
| 38 | 1-Amino-8-hydroxy-2-(3'-(2,3-dichlorpropionyl)-amino-6'-sulfophenylazo)-naphthalin-3,6-disulfonsäure | 1-Amino-5-(2,3-dichlorpropionylamino)-benzol-2-sulfonsäure | blau |
| 39 | 1-Amino-8-hydroxy-2-(3'-(2,3-dichlorpropionyl)-amino-4',6'-disulfophenylazo)-naphthalin-3,6-disulfonsäure | 1-Amino-3-(2,3-dichlorpropionylamino)-benzol-4,6-disulfonsäure | blau |
| 40 | do. | 1-Amino-5-(2,3-dichlorpropionylamino)-benzol-2-sulfonsäure | blau |
| 41 | 1-Amino-8-hydroxy-2-(3'-(2,3-dichlorpropionyl)-amino-6'-sulfophenylazo)-naphthalin-3,6-disulfonsäure | 1-Amino-3-(2,3-dichlorpropionylamino)-benzol-4,6-disulfonsäure | blau |
| 42 | do. | 1-Amino-4-(2,3-dichlorpropionylamino)-benzol-2-sulfonsäure | grünstichig blau |
| 43 | do. | 1-Amino-4-(2,3-dichlorpropionylamino)-benzol-2,5-disulfonsäure | grünstichig blau |
| 44 | 1-Amino-8-hydroxy-2-(3'-(2,3-dichlorpropionyl)-amino-4',6'-disulfophenylazo)-naphthalin-3,6-disulfonsäure | 1-Amino-4-(2,3-dichlorpropionylamino)-benzol-2-sulfonsäure | grünstichig blau |
| 45 | do. | 1-Amino-4-(2,3-dichlorpropionylamino)-benzol-2,5-disulfonsäure | grünstichig blau |

Bei einigen der genannten Farbstoffe werden weitere anwendungstechnische Vorteile erzielt, wenn man ihre 2,3-Dibrompropionyl-Gruppe(n) bzw. 2,3-Dichlorpropionyl-Gruppe(n) in die α-Bromacryloyl-Gruppe(n) bzw. α-Chloracryloyl-Gruppe(n) nach der folgenden Vorschrift umwandelt:

Eine ca. 10%ige wässrige Lösung des Farbstoffes mit einer oder zwei 2,3-Dibrompropionyl-Gruppen bzw. 2,3-Dichlorpropionyl-Gruppen wird auf 5°C gekühlt und auf pH 10 gestellt. Indem der freigesetzte Bromwasserstoff laufend durch Zugabe von 2 n Natriumhydroxydlösung neutralisiert wird, wird der pH der Reaktionslösung bei 10 gehalten. Nach vollständiger Eliminierungsreaktion wird der gebildete Reaktivfarbstoff bei pH 7 ausgesalzen, filtriert, gewaschen und im Vakuum getrocknet.

Patentansprüche

1. Verfahren zum Färben oder Bedrucken von cellulosehaltigem Fasermaterial mit Reaktivfarbstoffen, dadurch gekennzeichnet, dass man Reaktivfarbstoffe der Formel

$$D\left[\begin{array}{l}N - CO - Y\\ |\\ R\end{array}\right]_{1-2} \qquad (1) \quad ,$$

worin D der Rest eines sulfogruppenhaltigen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder der Rest eines gegebenenfalls substituierten Kohlenwasserstoffs, Y ein Rest

$$\begin{array}{l}-CH - CH_2 - X\\ \;\;|\\ \;\;X\end{array}$$

oder

$$\begin{array}{l}- C = CH_2\\ \;\;\;|\\ \;\;\;X\end{array}$$

und X Chlor oder Brom ist, in wässrigem Medium mit einem pH$>$7 einsetzt.

2. Verfahren gemäss Anspruch 1, dadurch gekennzeichnet, dass man Reaktivfarbstoffe der Formel (1), worin D der Rest eines Mono- oder Disazofarbstoffes ist, verwendet.

3. Verfahren gemäss Anspruch 1, dadurch gekennzeichnet, dass man Reaktivfarbstoffe der Formel (1), worin D der Rest eines Kupfer-Azofarbstoff-Komplexes ist, verwendet.

4. Verfahren gemäss Anspruch 1, dadurch gekennzeichnet, dass man Reaktivfarbstoffe der Formel (1), worin D der Rest eines Kupfer- oder Nickelphthalocyanins, Kupfer-Formazan-Komplexes oder Triphendioxazins ist, verwendet.

5. Verfahren gemäss Anspruch 3, dadurch gekennzeichnet, dass man Reaktivfarbstoffe der Formel (1), worin D der Rest eines 1:1-Kupferkomplexazofarbstoffes der Benzol- oder Naphthalinreihe ist, und das Kupferatom an jeweils eine metallisierbare Gruppe in ortho-Position zur Azobindung gebunden ist, verwendet.

6. Verfahren gemäss einem der Ansprüche 1 bis 5, dadurch gekennzeichnet, dass man Reaktivfarbstoffe der Formel (1), worin R Wasserstoff oder gegebenenfalls substituiertes $C_{1-4}$-Alkyl ist, verwendet.

7. Verfahren gemäss Anspruch 2, dadurch gekennzeichnet, dass man Reaktivfarbstoffe der Formel

$$[D_1\text{-N=N-K}]-\left[\begin{array}{l}\text{N-CO-Y}\\ |\\ \text{R}\end{array}\right]_{1-2} \qquad (2),$$

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, Y die für Anspruch 2 geltende Bedeutung hat, und der Reaktivrest an die Diazokomponente oder an die Kupplungskomponente gebunden ist, oder je ein Reaktivrest sowohl an die Diazokomponente als auch an die Kupplungskomponente gebunden ist, oder zwei Reaktivreste an die Kupplungskomponente oder an die Diazokomponente gebunden sind, verwendet.

8. Verfahren gemäss Anspruch 7, dadurch gekennzeichnet, dass man Reaktivfarbstoffe der Formel (2), worin R Wasserstoff oder Methyl ist, verwendet.

9. Verfahren gemäss einem der Ansprüche 1 bis 8, dadurch gekennzeichnet, dass man Reaktivfarbstoffe der Formel (1) oder (2), welche 2 Reste der Formel

$$-\underset{\substack{|\\ R}}{N}-CO-Y \qquad (3)$$

enthalten, verwendet.

10. Verfahren gemäss einem der Ansprüche 1 bis 9, dadurch gekennzeichnet, dass man Reaktivfarbstoffe der Formel (1) oder (2), worin Y ein $\alpha,\beta$-Dibromäthyl- oder $\alpha$-Bromvinylrest ist, verwendet.

11. Verfahren gemäss einem der Ansprüche 1 bis 10, dadurch gekennzeichnet, dass man die Reaktivfarbstoffe in wässrigem Medium mit einem $pH > 8$ einsetzt.

12. Verfahren gemäss Anspruch 11, zum Bedrucken von cellulosehaltigem Fasermaterial, dadurch gekennzeichnet, dass man eine wässrige Druckpaste mit einem pH von 8 bis 9 verwendet.

13. Verfahren gemäss Anspruch 11, zum Färben von cellulosehaltigem Fasermaterial, dadurch gekennzeichnet, dass man die Färbung in wässriger Lösung bei einem pH von 11 bis 13 ausführt.

14. Verfahren gemäss Anspruch 13, dadurch gekennzeichnet, dass man nach der Auszieh-, Kaltverweil- oder Pad-steam-Methode färbt.

15. Verfahren gemäss den Ausführungsbeispielen.

16. Das nach den Verfahren gemäss den Ansprüchen 1 bis 15 gefärbte oder bedruckte cellulosehaltige Fasermaterial.

17. Reaktivfarbstoff der Formel

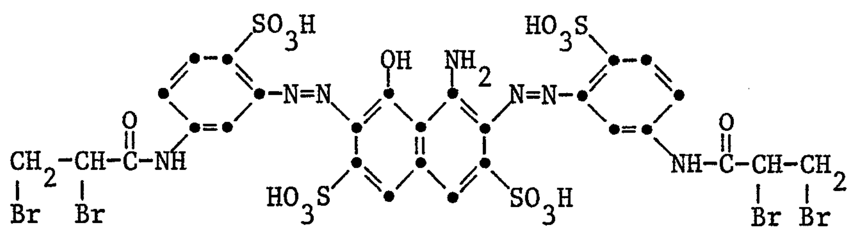

.

FO 7.1/IL/rz*

0112797

Europäisches Patentamt

# EUROPÄISCHER RECHERCHENBERICHT

Nummer der Anmeldung

EP 83 81 0538

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 755 290 (R. DE MONTMOLLIN et al.)<br>* Spalte 1, Zeile 17 - Spalte 2, Zeile 30; Spalte 5, Zeile 60 - Spalte 6, Zeile 39; Spalte 22, Zeilen 9-29; Spalte 42, Zeilen 15-32; Spalten 43,44, Tabelle, Farbstoff Nr. 60; Beispiele 11-16 *<br>--- | 1-3,5-10,14-17 | D 06 P 3/66<br>C 09 B 62/465 |
| X | DE-B-1 166 144 (CIBA)<br>* Beispiele 1,3; Spalte 1, Zeile 27 - Spalte 2, Zeile 50 *<br>--- | 1,2,4,6-8,14-16 | |
| X | DE-A-2 318 412 (BAYER)<br>* Seite 25, Beispiel 35; Seite 21, 2. Hälfte - Seite 22 *<br>--- | 1,2,6-8,10,14-16 | RECHERCHIERTE SACHGEBIETE (Int. Cl. 3)<br>D 06 P<br>C 09 B |
| A | DE-A-2 841 036 (SANDOZ)<br>* Anspruch 1; Seite 4, letzter Absatz, Zeile 4 *<br>----- | 1,11-13 | |

Der vorliegende Recherchenbericht wurde für alle Patentansprüche erstellt.

| Recherchenort | Abschlußdatum der Recherche | Prüfer |
|---|---|---|
| DEN HAAG | 05-03-1984 | DEKEIREL M.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82